# FASCICULE DE BREVET EUROPEEN

(11) **EP 1 241 050 B1**
(45) Date de publication et mention de la délivrance du brevet: **01.09.2010**
(21) Numéro de dépôt: 02290616.8
(22) Date de dépôt: 12.03.2002
(51) Int. Cl.: B60Q 1/14

(54) **Agencement d'un dispositif d'eclairage dans un vehicule automobile**
Anordnung für eine Beleuchtungsvorrichtung in einem Kraftfahrzeug
Arrangement of a lighting device in a vehicle

(30) Priorité: 14.03.2001 FR 0103497
(43) Date de publication de la demande: 18.09.2002
(73) Titulaire: VALEO VISION, 93012 Bobigny Cedex (FR)
(72) Inventeur: Nouet, Régis, c/o Valeo Vision, 93012 Bobigny Cedex (FR)

(56) Documents cités:
- EP-A- 0 989 354
- EP-A- 1 003 205
- WO-A-98/49716
- FR-A- 745 839

## Description

La présente invention concerne un agencement d'un dispositif d'éclairage dans un véhicule.

La présente invention concerne plus particulièrement un agencement d'un dispositif d'éclairage dans un véhicule automobile comportant un projecteur gauche et un projecteur droit qui sont agencés à l'avant du véhicule, du type dans lequel chaque projecteur comporte un réflecteur du type à surface complexe, de forme globalement parabolique concave, dont la géométrie est optimisée pour la fonction feu de croisement, du type dans lequel une lampe est agencée à l'intérieur du réflecteur et comporte un filament réalisant la fonction feu de croisement et un filament réalisant une fonction feu de route, le filament de croisement étant agencé globalement suivant l'axe principal de la lampe, orienté vers l'avant, qui est sensiblement horizontal et parallèle à la direction longitudinale du véhicule, et le filament de route étant agencé globalement suivant un axe secondaire parallèle à l'axe principal et décalé radialement par rapport à ce dernier, la position du filament de route étant définie par sa position angulaire, par rapport à une position origine située à la verticale de l'axe principal, sous le filament de croisement, le long d'un cercle centré sur l'axe principal et orienté positivement suivant le sens trigonométrique, lorsque l'on regarde vers l'avant suivant l'axe principal.

Un nouveau type normalisé de lampe à deux filaments, sans coupelle d'occultation, du type « H13 », a été développé pour équiper des projecteurs de véhicule, en vue de satisfaire aux normes réglementant l'éclairage des véhicules, notamment en Amérique du Nord et en Europe.

Ce type de lampe comporte deux filaments sensiblement parallèles, l'un pour réaliser la fonction feu de croisement, l'autre pour réaliser la fonction feu de route.

Ce type de lampe est agencé dans un projecteur de véhicule qui est optimisé pour réaliser la fonction feu de croisement et qui comporte un réflecteur à surface complexe.

Le réflecteur à surface complexe est un réflecteur dont la surface réfléchissante est constituée d'une multitude de portions de paraboles orientées de manière que le projecteur produise un faisceau de feu de croisement réglementaire.

Le faisceau de feu de croisement réglementaire est caractérisé notamment par une « coupure », c'est à dire une limite directionnelle au-dessus de laquelle n'est émis qu'une intensité lumineuse peu éblouissante. Cette coupure est généralement constituée d'un demi-plan horizontal, à gauche de l'axe longitudinal du projecteur (pour un sens de circulation à droite), et d'un demi-plan légèrement incliné vers le haut, à droite de ce même axe longitudinal. Ce dernier demi-plan est relevé d'un « angle de relèvement de coupure » qui est, pour un faisceau normalisé européen, de 15°.

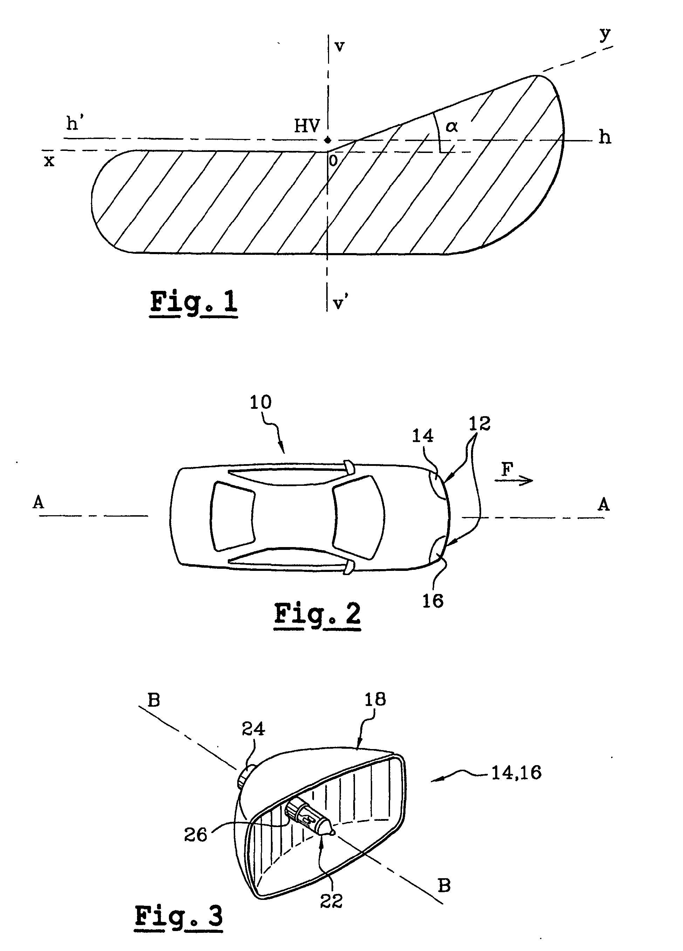

L'éclairement produit par un tel faisceau sur un écran placé à environ 25 mètres à l'avant du projecteur est représenté sur la figure 1, le point HV étant la trace de l'axe optique du projecteur, à l'intersection du plan vertical v'v et du plan horizontal h'h. La coupure est définie par la demi-droite Ox qui s'étend parallèlement et au-dessous de l'axe horizontal h'h, du point O vers la gauche, et par la demi-droite Oy, inclinée de 15°, qui s'étend du point O vers le haut et vers la droite.

Le faisceau de feu de route est globalement centré sur le point HV, où son intensité lumineuse doit être maximale.

On note que la description se réfère à un sens de circulation du véhicule à droite. Pour un sens de circulation à gauche, il suffit de considérer les figures, représentant l'écran ou le projecteur, inversées par rapport à l'axe v'v.

Lorsque le projecteur fonctionne en feu de croisement, on constate que la lumière émise par le filament de croisement se réfléchit sur le filament de route, situé à proximité du filament de croisement, ce qui provoque l'émission de rayons lumineux parasites en dehors du faisceau de croisement, en particulier au-dessus de la coupure. Ces rayons lumineux parasites peuvent gêner, par éblouissement, les conducteurs de véhicules circulant en sens inverse sur la voie de gauche.

De plus, le filament de route étant agencé dans la zone émettrice du filament de code, il crée des zones d'ombre ou diminue l'intensité lumineuse dans certaines zones d'éclairement du faisceau de croisement.

Lorsque le projecteur fonctionne en feu de route, il est nécessaire que l'intensité lumineuse du faisceau d'éclairage produit par le filament de route soit maximale au point HV.

Actuellement, le porte lampe est agencé de façon identique dans le projecteur gauche et dans le projecteur droit, de manière que le filament de route soit agencé à +50° environ, par rapport à la position origine sur le cercle défini précédemment. Cette position angulaire permet d'obtenir un faisceau de croisement et un faisceau de route qui répondent aux exigences réglementaires.

Cependant, cette position angulaire représente un compromis qui ne permet pas d'obtenir une efficacité optimale des projecteurs. En particulier, en feu de route, le projecteur n'exploite pas suffisamment les capacités maximales d'éclairage du filament de feu de route. Le faisceau de route est décalé latéralement.

II est également connu de la demande de brevet EP-A-0 989 354 une lampe bi filament code/route, où le filament route et le filament code sont agencés relativement de façon à ce que l'image virtuelle de la partie illuminée du filament route ne produise pas de lumière éblouissante dans le faisceau code.

L'invention vise à remédier à ces inconvénients en proposant un projecteur de véhicule qui produise un faisceau de feu de route plus efficace, tout en respectant la réglementation.

Dans ce but, l'invention propose un agencement d'un dispositif d'éclairage du type décrit précédemment, **caractérisé en ce que** la position angulaire de chaque filament de route est comprise entre -90° et +90°, et en ce que la position angulaire du filament de route du projecteur gauche est différente de la position angulaire du filament de route du projecteur droit.

Selon d'autres caractéristiques de l'invention :
- les positions angulaires des deux filaments de route sont de signes opposés ;
- la position angulaire du filament de route du projecteur gauche est de signe négatif et la position angulaire du filament de route du projecteur droit est de signe positif ;
- la position angulaire du filament de route du projecteur gauche est de signe positif et la position angulaire du filament de route du projecteur droit est de signe négatif ;
- la valeur absolue de la position angulaire de signe positif est égale à environ 60°, et la valeur absolue de la position angulaire de signe négatif est égale à environ 40°.

D'autres caractéristiques et avantages de l'invention apparaîtront à la lecture de la description détaillée qui suit pour la compréhension de laquelle on se reportera aux dessins annexés dans lesquels :
- la figure 1 est un schéma qui représente un faisceau d'éclairage réglementaire en feu de croisement ;
- la figure 2 est une vue de dessus qui représente schématiquement un véhicule comportant un agencement d'un dispositif d'éclairage réalisé conformément aux enseignements de l'invention ;
- la figure 3 est une vue en perspective qui représente schématiquement un projecteur du véhicule de la figure 2 ;
- la figure 4 est une vue en perspective qui représente schématiquement une lampe du type H13 ;
- la figure 5 est un schéma qui illustre la position du filament de route par rapport au filament de croisement en vue arrière selon la flèche F5 de la figure 4 ;
- la figure 6 est un schéma qui illustre un exemple d'image du filament de route se projetant sur le point HV en feu de route, pour un point donné du réflecteur du projecteur de la figure 3 ;
- la figure 7 est un diagramme qui illustre le pourcentage d'images du filament de route qui sont projetées sur le point HV en fonction de la position angulaire du filament de route ;
- la figure 8 est un schéma similaire à celui de la figure 6 qui illustre un exemple d'images du filament de croisement et du filament de route se projetant sur le point HV en feu de croisement, pour un point donné du réflecteur du projecteur de la figure 3 ;
- la figure 9 est un diagramme similaire à celui de la figure 7 qui illustre le pourcentage d'images du filament de route dont la zone éblouissante est projetée sur le point HV en fonction de la position angulaire du filament de route ;
- la figure 10 est un diagramme similaire à celui de la figure 7 qui illustre la qualité de l'éclairage du projecteur, en feu de route et en feu de croisement, en fonction de la position angulaire du filament de route ;
- la figure 11 est un schéma qui représente le faisceau de feu de route pour une position angulaire du filament de route égale à +60° ;
- la figure 12 est un schéma qui représente le faisceau de feu de route pour une position angulaire du filament de route égale à -40°.

On a représenté sur la figure 2 un véhicule 10 qui comporte un agencement d'un dispositif d'éclairage 12 réalisé conformément aux enseignements de l'invention.

Le dispositif d'éclairage 12 comporte un projecteur gauche 14 et un projecteur droit 16 qui sont agencés à l'avant du véhicule 10, de chaque côté de son axe longitudinal horizontal A-A, orienté vers l'avant, suivant la flèche F, en considérant la figure 2.

Comme on l'a représenté schématiquement sur la figure 3, chaque projecteur 14, 16 comporte un réflecteur 18 du type à surface complexe, de forme globalement parabolique concave, dont la géométrie est optimisée pour réaliser une fonction feu de croisement, selon en particulier l'enseignement des documents FR-A-2.760.067 et FR-A-2.760.068.

Le fond 20 du réflecteur 18 est percé de manière à permettre l'agencement d'une lampe 22 du type H13, qui est montée sur un support 24, à l'intérieur du réflecteur 18, au travers du trou 26 ainsi formé.

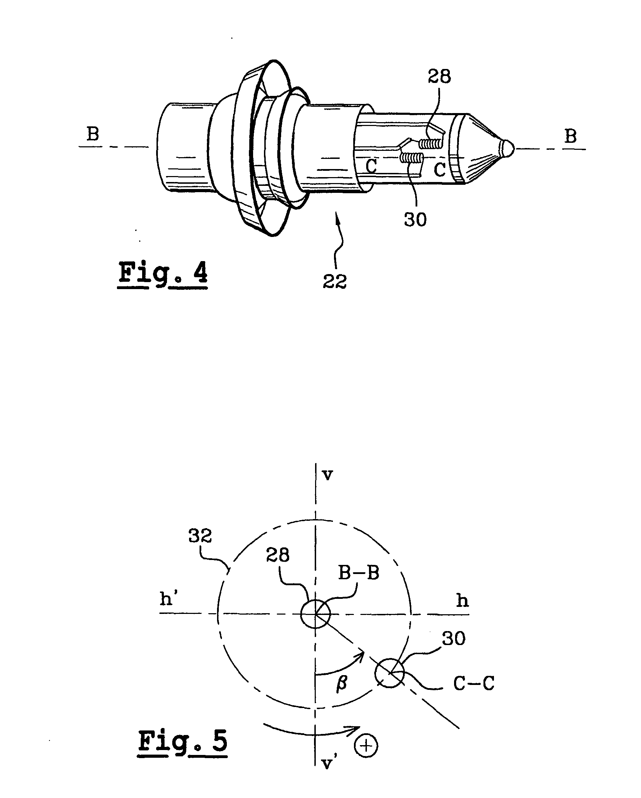

La lampe 22, qui est représentée en détail à la figure 4, a globalement une forme cylindrique selon un axe principal B-B qui est sensiblement horizontal et parallèle à la direction longitudinale A-A du véhicule 10, et qui est orienté vers l'avant.

La lampe 22 comporte un filament 28 réalisant la fonction feu de croisement et un filament 30 réalisant une fonction feu de route.

Le filament de croisement 28 est agencé globalement suivant l'axe principal B-B de la lampe et il est situé globalement au foyer du réflecteur 18.

Le filament de route 30 est agencé globalement suivant un axe secondaire C-C parallèle à l'axe principal B-B et il est décalé radialement par rapport à ce dernier. Le filament de route 30 est ici par exemple décalé axialement vers l'arrière par rapport au filament de croisement 28.

En considérant la figure 5, on définit la position du filament de route 30 par sa position angulaire β, par rapport à une position origine (β=0) située à la verticale de l'axe principal B-B, sous le filament de croisement 28, le long d'un cercle 32 centré sur l'axe principal B-B et orienté positivement suivant le sens trigonométrique, lorsque l'on regarde vers l'avant suivant l'axe principal B-B.

Si l'on fait pivoter la lampe 22 et son support 24 autour de l'axe principal B-B, la position du filament de croisement 28 ne varie pas par rapport au réflecteur 18, alors que la position ou orientation angulaire β du filament de route 30 varie, et donc sa position par rapport au réflecteur 18 varie.

Pour déterminer la position angulaire β optimale du filament de route 30, on calcule la position de son image, réfléchie vers l'infini, pour chaque point de la surface réfléchissante du réflecteur 18, pour une position angulaire β donnée.

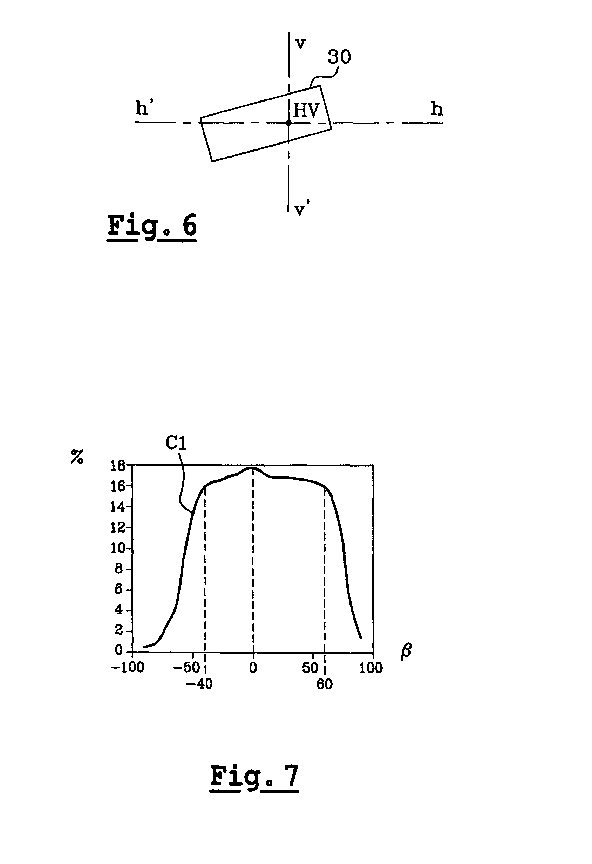

La figure 6 représente l'exemple d'une image du filament de route 30 pour un point du réflecteur 18. Dans cet exemple, on constate que l'image du filament de route 30 est projetée sur le point HV.

On affecte arbitrairement la valeur « 1 » pour chaque image qui est projetée sur le point HV et la valeur « 0 » pour les autres images.

Plus le nombre d'images qui se projettent sur le point HV est important, plus le faisceau de feu de route est efficace.

On réalise donc des calculs théoriques et/ou des mesures de manière à déterminer, pour chaque position angulaire β, le nombre d'images qui sont projetées sur le point HV.

On en déduit la courbe C1 de la figure 7, qui représente le pourcentage de points du réflecteur 18 qui projettent l'image du filament de route 30 sur le point HV, en fonction de la position angulaire β du filament de route 30.

On constate que l'efficacité du filament de route 30 est maximale lorsqu'il occupe sa position angulaire β d'origine, c'est à dire qu'il est situé à la verticale du filament de croisement 28, sous ce dernier.

On constate aussi que la courbe C1 forme un palier, globalement entre la position angulaire -40° et la position angulaire +60°, pour lequel l'efficacité du filament de route 30 reste très proche de sa valeur maximale.

Ce palier n'est pas symétrique par rapport à la position angulaire β d'origine car le réflecteur 18 n'est pas symétrique par rapport au plan vertical et longitudinal v'v, sa géométrie étant optimisée pour réaliser la fonction feu de croisement qui produit un faisceau d'éclairage asymétrique.

On réalise des calculs et/ou des mesures similaires en vue de déterminer les positions angulaires β du filament de route 30 qui produisent le moins de rayons lumineux parasites, sources d'éblouissement pour les véhicules circulant en sens opposé.

Lorsque le filament de code 28 est allumé, une partie des rayons lumineux émis se réfléchissent sur le filament de route 30, ce qui le rend brillant sur environ un quart de la surface de chacune de ses images.

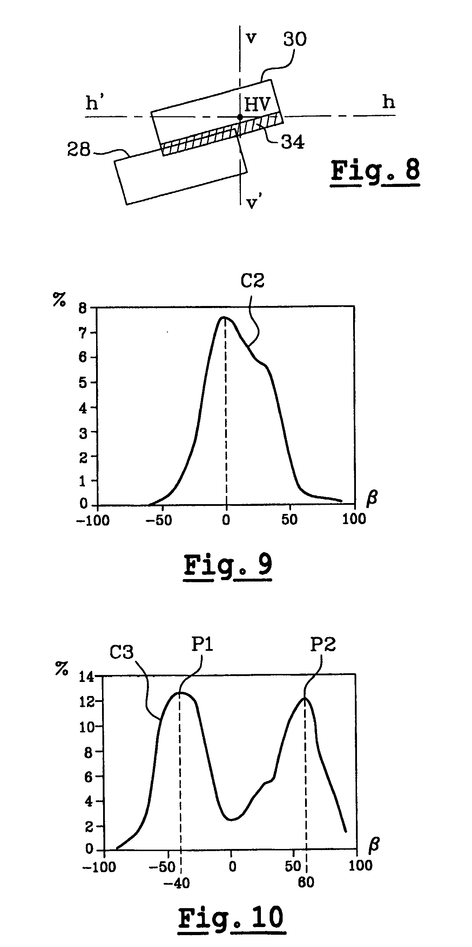

La figure 8 représente un exemple d'images du filament de code 28 et du filament de route 30 pour un point donné du réflecteur 18, lorsque le filament de code 28 est allumé. On a hachuré la zone éblouissante 34 de l'image du filament de route 30.

Pour réaliser une fonction feu de croisement réglementaire, il faut que la zone éblouissante 34 soit située en dehors du point HV, puisque la réglementation définit une intensité lumineuse maximale à ne pas dépasser au point HV, en fonction feu de croisement.

L'optimisation de la fonction feu de route consiste donc à maintenir au maximum les trois quarts restants de chacune des images du filament de route 30 sur le point HV.

On affecte arbitrairement la valeur « 1 » pour chaque image du filament de route 30 dont la zone éblouissante 34 est projetée sur le point HV et la valeur « 0 » pour les autres images.

Par exemple, l'image de la figure 8 rend la valeur « 0 » puisque la zone éblouissante 34 est située sous le point HV.

Plus le nombre d'images dont la zone éblouissante 34 se projette sur le point HV est important, plus le faisceau de feu de croisement comporte de rayons lumineux parasites éblouissants.

On réalise donc des calculs théoriques et/ou des mesures de manière à déterminer, pour chaque position angulaire β, le nombre d'images dont la zone éblouissante 34 est projetée sur le point HV.

On obtient la courbe C2 de la figure 9, qui représente le pourcentage de points du réflecteur 18 qui projettent la zone éblouissante 34 de l'image du filament de route 30 sur le point HV, en fonction de la position angulaire β du filament de route 30.

On constate que l'éblouissement en feu de croisement est maximal lorsque le filament de route 30 occupe sa position angulaire β d'origine.

Plus la position angulaire β du filament de route 30 est proche de -90° ou de +90°, moins il y a d'éblouissement.

En effectuant la différence entre la courbe C1 de la figure 7 et la courbe C2 de la figure 9, on obtient une courbe C3 illustrant la qualité de l'éclairage, qui est représentée à la figure 10.

Sur cette courbe C3 on observe deux pics P1, P2 qui représentent respectivement deux groupes de valeurs de position angulaire β du filament de route 30 pour lesquelles l'efficacité du feu de route est proche de la valeur maximale et l'éblouissement en feu de croisement est proche de la valeur minimale. Ces deux pics P1, P2 sont globalement centrés sur les valeurs -40° et +60°.

Grâce à cette courbe C3, on constate qu'il existe deux positions angulaires β optimales du filament de route 30 qui permettent d'obtenir une efficacité maximale en feu de route, sans provoquer des éblouissements en feu de croisement.

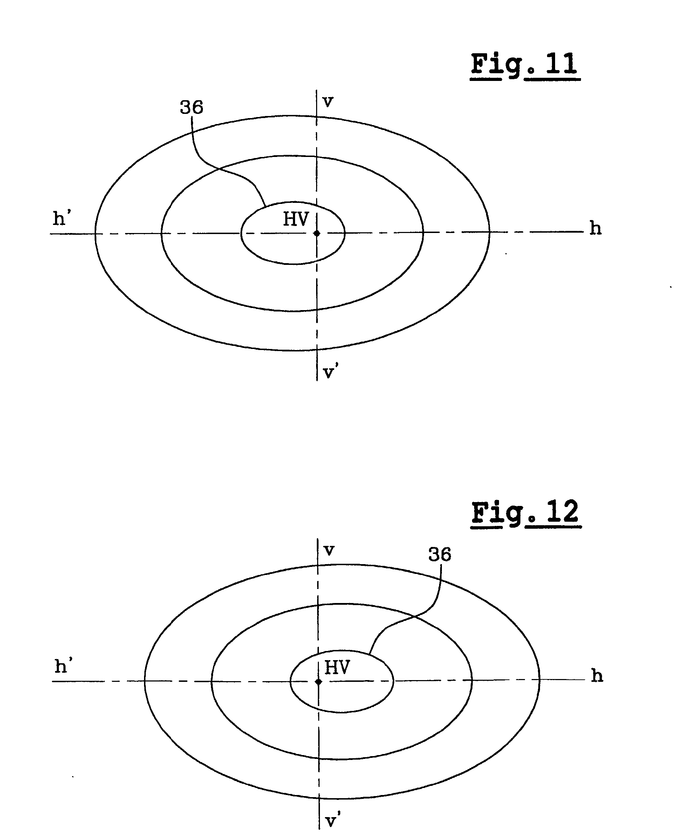

On observe ensuite sur un écran, représenté sur la figure 11, le faisceau d'éclairage produit en feu de route par un projecteur 14, 16 comportant un filament de route 30 agencé à +60°.

Sur la figure 11, les lignes correspondent à des isolux, c'est à dire qu'elles passent par des points de l'écran qui reçoivent la même valeur d'intensité lumineuse. La ligne 36 délimite ici une tache d'intensité lumineuse maximale produite par le projecteur 14, 16 en feu de route.

On constate que la tache 36 d'intensité lumineuse maximale n'est pas centrée sur le point HV mais elle est légèrement décalée vers la gauche.

De manière opposée, en considérant la figure 12, pour un projecteur 14, 16 comportant un filament de route 30 agencé à -40°, on constate que la tache 36 d'intensité lumineuse maximale, en feu de route, est légèrement décalée vers la droite.

Avantageusement, on choisit d'agencer le filament de route 30 du projecteur gauche 14 dans une position angulaire β sensiblement égale à +60° et le filament de route 30 du projecteur droit 16 dans une position angulaire β sensiblement égale à -40°.

Cette disposition permet d'exploiter l'effet complémentaire des faisceaux d'éclairage produits par chaque projecteur 14, 16 pour obtenir une tache d'intensité lumineuse maximale, en feu de route, sensiblement centrée sur le point HV.

Cette disposition complémentaire permet aussi de compenser des appauvrissements d'éclairage dans certaines zones du faisceau de feu de route et dans certaines zones du faisceau de feu de croisement, ces appauvrissements étant dus à l'effet de masquage produit par la présence d'un filament éteint dans la zone d'éclairage du filament allumé.

## Revendications

1. Agencement d'un dispositif d'éclairage (12) dans un véhicule automobile (10) comportant un projecteur gauche (14) et un projecteur droit (16) qui sont agencés à l'avant du véhicule (10), du type dans lequel chaque projecteur (14, 16) comporte un réflecteur (18) du type à surface complexe, de forme globalement parabolique concave, dont la géométrie est optimisée pour la fonction feu de croisement, du type dans lequel une lampe (22) est agencée à l'intérieur du réflecteur (18) et comporte un filament (28) réalisant la fonction feu de croisement et un filament (30) réalisant une fonction feu de route, le filament de croisement (28) étant agencé globalement suivant l'axe principal (B-B) de la lampe (22), orienté vers l'avant, qui est sensiblement horizontal et parallèle à la direction longitudinale (A-A) du véhicule (10), et le filament de route (30) étant agencé globalement suivant un axe secondaire (C-C) qui est parallèle à l'axe principal (B-B) et qui est décalé radialement par rapport audit axe principal (B-B), la position du filament de route (30) étant définie par sa position angulaire (β), par rapport à une position origine située à la verticale de l'axe principal (B-B), sous le filament de croisement (28), le long d'un cercle (32) centré sur l'axe principal (B-B) et orienté positivement suivant le sens trigonométrique, lorsque l'on regarde vers l'avant suivant l'axe principal (B-B),
**caractérisé en ce que** la position angulaire (β) de chaque filament de route (30) est comprise entre -90° et +90°, et **en ce que** la position angulaire (β) du filament de route (30) du projecteur gauche (14) est différente de la position angulaire (β) du filament de route (30) du projecteur droit (16).

2. Agencement selon la revendication précédente, **caractérisé en ce que** les positions angulaires (β) des deux filaments de route (30) sont de signes opposés.

3. Agencement selon la revendication précédente, **caractérisé en ce que** la position angulaire (β) du filament de route (30) du projecteur gauche (14) est de signe négatif et la position angulaire (β) du filament de route (30) du projecteur droit (16) est de signe positif.

4. Agencement selon la revendication 2, **caractérisé en ce que** la position angulaire (β) du filament de route (30) du projecteur gauche (14) est de signe positif et la position angulaire (β) du filament de route (30) du projecteur droit (16) est de signe négatif.

5. Agencement selon l'une quelconque des revendications 2 à 4, **caractérisé en ce que** la valeur absolue de la position angulaire (β) de signe positif est égale à environ 60°, et la valeur absolue de la position angulaire (β) de signe négatif est égale à environ 40°.

## Claims

1. Arrangement of a lighting device (12) in a motor vehicle (10) comprising a left headlight (14) and a right headlight (16) which are arranged at the front of the vehicle (10), of the type wherein each headlight (14, 16) comprises a reflector (18) of the complex surface type, with a globally concave parabolic form, the geometry of which is optimised for the low-beam function, of the type wherein a lamp (22) is provided in the interior of the reflector (18), and comprises a filament (28) which provides the low-beam function, and a filament (30) which provides a high-beam function, the low-beam filament (28) being arranged globally according to the main axis (B-B) of the lamp (22), which axis is oriented forwards, and is substantially horizontal and parallel to the longitudinal direction (A-A) of the vehicle (10), and the high-beam filament (30) being arranged globally according to a secondary axis (C-C) which is parallel to the main axis (B-B) and is offset radially relative to the said main axis (B-B), the position of the high-beam filament (30) being defined by its angular position (β) relative to an original position which is situated at the vertical line of the main axis (B-B), below the low-beam filament (28), along a circle (32) which is centred on the main axis (B-B) and is oriented positively according to the trigonometric direction, when a person is looking forwards according to the main axis (B-B),
**characterised in that** the angular position (β) of each high-beam filament (30) is contained between -90° and +90°, and **in that** the angular position (β) of the high-beam filament (30) of the left headlight (14) is different from the angular position (β) of the high-beam filament (30) of the right headlight (16).

2. Arrangement according to the preceding claim, **characterised in that** the angular positions (β) of the two high-beam filaments (30) have opposite signs.

3. Arrangement according to the preceding claim, **characterised in that** the angular position (β) of the high-beam filament (30) of the left headlight (14) has a negative sign, and the angular position (β) of the high-beam filament (30) of the right headlight (16) has a positive sign.

4. Arrangement according to claim 2, **characterised in that** the angular position (β) of the high-beam filament (30) of the left headlight (14) has a positive sign, and the angular position (β) of the high-beam filament (30) of the right headlight (16) has a negative sign.

5. Arrangement according to any one of claims 2 to 4, **characterised in that** the absolute value of the angular position (β) with a positive sign is equal to approximately 60°, and the absolute value of the angular position (β) with a negative sign is equal to approximately 40°.

## Patentansprüche

1. Anordnung einer Beleuchtungsvorrichtung (12) in einem Kraftfahrzeug (10) mit einem linken Scheinwerfer (14) und einem rechten Scheinwerfer (16), die an der Frontseite des Fahrzeugs (10) angeordnet sind, des Typs, bei dem jeder Scheinwerfer (14, 16) einen Reflektor (18) vom Typ Komplexflächen-Reflektor mit einer allgemein konkaven parabolischen Form umfasst, dessen Geometrie für die Abblendlichtfunktion optimiert ist, des Typs, bei dem eine Lampe (22) innen im Reflektor (18) angeordnet ist und eine die Abblendlichtfunktion ausführende Wendel (28) und eine eine Fernlichtfunktion ausführende Wendel (30) aufweist, wobei die Abblendlichtwendel (28) allgemein längs der nach vorne gerichteten Hauptachse (B-B) der Lampe (22) angeordnet ist, die im Wesentlichen horizontal und parallel zur Längsrichtung (A-A) des Fahrzeugs (10) ist, und wobei die Fernlichtwendel (30) allgemein längs einer zweiten Achse (C-C) angeordnet ist, die zur Hauptachse (B-B) parallel ist und die zur Hauptachse (B-B) radial versetzt ist, wobei die Position der Fernlichtwendel (30) durch ihre Winkelstellung (β) bezüglich einer in der Vertikalen der Hauptachse (B-B) gelegenen ursprünglichen Position unter der Abblendlichtwendel (28) entlang eines auf die Hauptachse (B-B) zentrierten und in trigonometrischer Richtung positiv orientierten Kreises (32) definiert ist, wenn man längs der Hauptachse (B-B) nach vorne blickt,
**dadurch gekennzeichnet, dass** die Winkelstellung (β) jeder Fernlichtwendel (30) zwischen -90° und +90° liegt, und dass sich die Winkelstellung (β) der Fernlichtwendel (30) des linken Scheinwerfers (14) von der Winkelstellung (β) der Fernlichtwendel (30) des rechten Scheinwerfers (16) unterscheidet.

2. Anordnung nach dem vorhergehenden Anspruch,
**dadurch gekennzeichnet, dass** die Winkelstellungen (β) der beiden Fernlichtwendeln (30) entgegengesetzte Vorzeichen haben.

3. Anordnung nach dem vorhergehenden Anspruch,
**dadurch gekennzeichnet, dass** die Winkelstellung (β) der Fernlichtwendel (30) des linken Scheinwerfers (14) ein negatives Vorzeichen hat und die Winkelstellung (β) der Fernlichtwendel (30) des rechten Scheinwerfers (16) ein positives Vorzeichen hat.

4. Anordnung nach Anspruch 2,
**dadurch gekennzeichnet, dass** die Winkelstellung (β) der Fernlichtwendel (30) des linken Scheinwerfers (14) ein positives Vorzeichen hat und die Winkelstellung (β) der Fernlichtwendel (30) des rechten Scheinwerfers (16) ein negatives Vorzeichen hat.

5. Anordnung nach einem der Ansprüche 2 bis 4,
**dadurch gekennzeichnet, dass** der Absolutwert der Winkelstellung (β) mit positivem Vorzeichen gleich etwa 60° ist und der Absolutwert der Winkelstellung (β) mit negativem Vorzeichen gleich etwa 40° ist.
